# FASCICULE DE BREVET EUROPEEN

(11) **EP 0 497 654 B1**
(45) Date de publication et mention de la délivrance du brevet: **15.03.1995**
(21) Numéro de dépôt: 92400140.7
(22) Date de dépôt: 20.01.1992
(51) Int. Cl.: H02G 1/08

(54) **Procédé et dispositif pour la lubrification d'une conduite enterrée simultanément au soufflage d'un câble dans cette conduite**
Verfahren zum Einfetten eines erdverlegten Rohrs mit gleichzeitigem Einblasen eines Kabels in dieses Rohr
Process and device for lubrification of a buried conduit simultaneously with blowing a cable into this conduit

(30) Priorité: 29.01.1991 FR 9100989
(43) Date de publication de la demande: 05.08.1992
(73) Titulaire: FRANCE TELECOM, 75015 Paris (FR)
(72) Inventeur: Pecot, Alain, F-22300 Lannion (FR); Beaumanoir, Yvon, F-22300 Lannion (FR)
(74) Mandataire: Armengaud Ainé, Alain

(56) Documents cités:
- FR-A- 2 191 314
- FR-A- 2 383 538
- GB-A- 1 242 013
- US-A- 4 108 279

## Description

La présente invention est relative à un procédé pour la mise en place dans une conduite de grande longueur d'un câble électrique, notamment du genre à fibres optiques, permettant d'effectuer cette mise en place simultanément avec une lubrification continue de la surface interne de la conduite, facilitant le glissement du câble, en évitant les frottements et éventuels coincements de celui-ci. L'invention concerne également un dispositif pour la mise en oeuvre de ce procédé.

On connaît déjà diverses techniques de mise en place d'un câble dans une conduite, notamment par soufflage, où grâce à l'injection par une extrémité de la conduite d'un flux d'air sous pression avec un débit déterminé, on exerce sur un furet, piston ou analogue, placé ou relié à la tête du câble, un effort de traction suffisant pour entraîner ce câble, déroulé à partir d'un touret disposé à l'extérieur, sur une longueur notable de la conduite.

Toutefois, on sait que la pose convenable nécessite en règle la plus générale, une lubrification efficace de la conduite, en particulier pour des sections de cette dernière de grande longueur, pouvant atteindre 2.400 m sans interruption.

Notamment, les coefficients de frottement créés entre le câble et la surface interne de la conduite doivent être les plus réduits possibles, exigeant que la lubrification soit en pratique uniformément répartie sur toute la distance où le câble doit être tiré.

On a déjà proposé des solutions pour réaliser simultanément une telle lubrification en même temps que l'injection du flux d'air de soufflage, cette lubrification étant réalisée au moment de l'admission du câble à une extrémité de la conduite, en particulier par le document intermédiaire FR-A- 2 655 783 du 13 Décembre 1989 au nom des demandeurs, dans laquelle est décrit et revendiqué un pistolet d'injection associé à une réserve de lubrifiant, l'ensemble étant aménagé pour provoquer une aspiration continue de ce lubrifiant au fur et à mesure que le câble pénètre dans la conduite.

Cependant, cette lubrification se réalise seulement à l'entrée de la conduite et ne se propage pas uniformément au long de celle-ci, ce qui limite son efficacité. Il est donc nécessaire de pré-lubrifier la surface interne de la conduite lors de sa fabrication en usine, ce qui est délicat, souvent coûteux et surtout comporte l'inconvénient que cette lubrification ne s'effectue pas à l'endroit et en même temps que le soufflage du câble, les conduites enterrées dans lesquelles ces câbles doivent être mis en place, pouvant être parfois très éloignées de l'usine de fabrication ; en outre, un temps notable peut séparer la phase de lubrification de celle du soufflage, avec la conséquence d'un vieillissement du lubrifiant et d'une altération inéluctable de ses qualités.

Avec un lubrifiant liquide, ces inconvénients sont limités mais sont substitués par d'autres désavantages. Notamment, la répartition du lubrifiant dans la conduite peut être compromise lors de la mise sous terre de la conduite, dans les points les plus bas de celle-ci, dont le profil peut constituer des siphons, ce qui provoque un effet contraire au cours de l'opération de soufflage, en rendant parfois celle-ci impossible à mener à bien, le passage du furet de traction pouvant être totalement empêché à la traversée de tels siphons par la colonne de lubrifiant qu'il y rencontre.

Dans d'autres solutions, telles par exemple que celles décrites dans le FR-A-2.191.314 ou le EP-A-0.060.173, la conduite peut également être lubrifiée sur place, juste avant la pose du câble. Mais dans de tels systèmes, les longueurs de câble pouvant être efficacement soufflées dans la conduite, sont limitées et ne dépassent guère 300 m. En outre, dans le cas où le lubrifiant est constitué de micro-billes en un matériau plastique, comme c'est le cas en particulier dans le EP-A-0.060.173, l'usage d'un furet ne peut être envisagé, car celui-ci chasserait ces micro-billes hors de la conduite au cours du soufflage, en éliminant l'effet lubrificateur tel que précisément recherché.

L'invention a pour objet un procédé et un dispositif, permettant une lubrification de la paroi interne d'une conduite sur toute la longueur de celle-ci, simultanément avec l'entraînement par soufflage du câble à l'intérieur de cette conduite.

A cet effet le procédé considéré, consistant à assurer la mise en place d'un câble par injection d'air comprimé à une des extrémités d'une conduite par laquelle pénètre le câble pour exercer sur au moins un furet ou analogue, monté ou lié par une tête de câble et fermant la conduite de manière sensiblement étanche, ce furet transmettant un effort de traction pour l'entraînement du câble, se caractérise en ce qu'il consiste à lubrifier en permanence la surface interne de la conduite au fur et à mesure du déplacement du furet au moyen d'une réserve de lubrifiant de volume variable, délimitée et en contact avec la paroi interne de la conduite, disposé en arrière du furet mais à l'avant du câble et se déplaçant avec celui-ci selon la longueur de la conduite.

L'invention concerne également un dispositif pour la mise en oeuvre de ce procédé, caractérisé en ce qu'il comporte un premier furet lié à la tête du câble, présentant un diamètre externe ou une dimension transversale légèrement inférieure au diamètre interne de la conduite, et un second furet, placé à distance limitée du premier, en avant de celui-ci par rapport à la direction de déplacement du câble dans la conduite et réuni au premier furet par une liaison souple, le second furet présentant un diamètre externe sensiblement égal au diamètre interne de la conduite, l'espace compris entre les deux furets et la paroi intérieure de la conduite formant réserve pour un volume de lubrifiant déterminé en fonction de la longueur totale de la conduite où le câble est à mettre en place et du débit de fuite du lubrifiant vers l'arrière du premier furet à la périphérie de celui-ci.

Selon une caractéristique particulière du dispositif considéré, la liaison souple entre les premier et second furets est constituée par un filin de connexion flexible, propre à accommoder les variations de la distance entre ces furets au fur et à mesure de l'épuisement de la réserve du lubrifiant lors de la mise en place du câble selon la longueur de la conduite.

Avantageusement, chaque furet comporte un corps central, terminé à l'arrière par une bague de guidage ajourée et à l'avant par une tête s'étendant, au moins en partie, transversalement en direction de la paroi interne de la conduite.

Selon une autre caractéristique, la tête du premier furet comporte à l'avant, en regard du second furet, un organe d'accrochage avec le filin de connexion flexible et à l'arrière une jupe mince annulaire, faisant saillie à partir du corps central en direction de la paroi interne de la conduite. De préférence, la jupe mince comporte une surface conique, terminée par un rebord sensiblement cylindrique, ménageant entre la jupe et la paroi interne de la conduite un jeu annulaire réduit, pour l'échappement contrôlé du lubrifiant lors du déplacement du furet.

Dans un mode de réalisation préféré de l'invention, les premier et second furets sont réalisés en un matériau présentant un coefficient de friction limité vis-à-vis de la paroi interne de la conduite, notamment en polytétrafluoroéthylène "Téflon" ou analogue.

D'autres avantages du procédé de lubrification d'une conduite enterrée simultanément avec le tirage d'un câble dans cette conduite et d'un dispositif pour la mise en oeuvre de ce procédé apparaîtront encore à travers la description qui suit d'un exemple de réalisation donné ci-après à titre indicatif et non limitatif, en référence aux dessins annexés sur lesquels :
- La Figure 1 est une vue en coupe longitudinale partielle d'une conduite enterrée, dans laquelle le tirage d'un câble est réalisé au moyen de deux furets réunis par une connexion souple, selon le procédé de l'invention.
- La Figure 2 est une autre vue de la conduite selon la Figure 1, notamment à proximité de l'extrémité opposée à celle par laquelle est introduit le câble à mettre en place, pour illustrer la variation de volume de la réserve de lubrifiant.
- La Figure 3 est une vue en coupe à plus grande échelle du premier furet mis en oeuvre avec le dispositif selon l'invention.
- La Figure 4 est une vue schématique à plus faible échelle, illustrant les moyens permettant de constituer la réserve de lubrifiant entre les deux furets réalisant le tirage du câble.

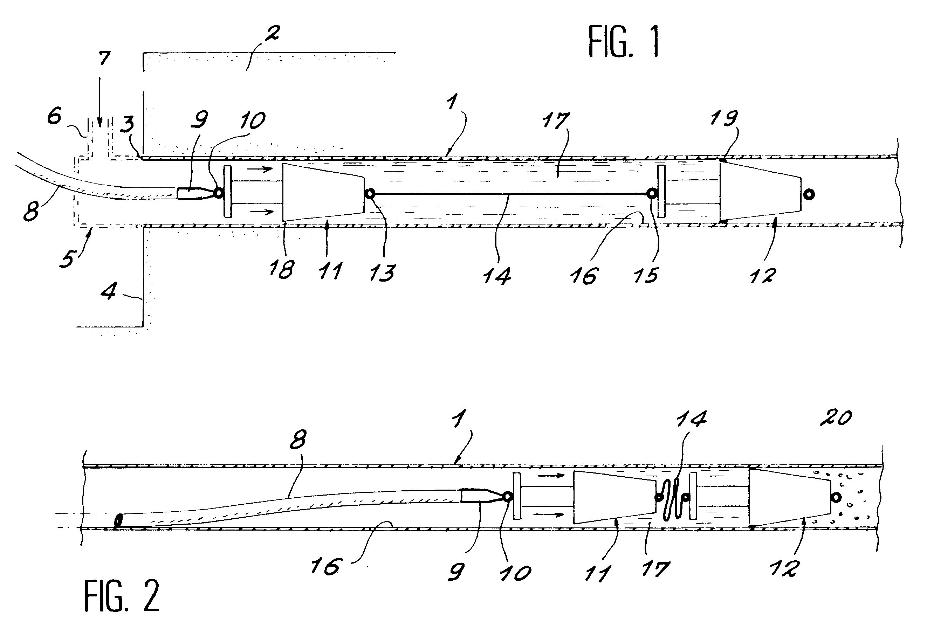

Dans l'exemple illustré sur la figure 1, la référence 1 désigne une conduite souterraine, préalablement enfouie à une profondeur donnée sous le sol 2, cette conduite débouchant par ses extrémités, dont l'une seulement 3 est représentée sur le dessin, dans une fosse d'accès 4, la distance séparant deux fosses consécutives selon la longueur de la conduite pouvant être importante et en particulier atteindre 2.400 m. Sur l'extrémité 3 représentée, est monté un pistolet d'injection 5, très schématiquement illustré sur le dessin et dont le détail de la réalisation importe peu à l'invention, du moment qu'il permet d'assurer, par l'intermédiaire d'une conduite d'admission 6, l'introduction à l'intérieur de la conduite d'un flux d'air comprimé 7, à débit et pression déterminés, en même temps que l'introduction de l'extrémité d'un câble 8 à mettre en place à l'intérieur de la conduite 1, notamment par un effet de soufflage sur des moyens liés à ce câble et sur lesquels s'exerce la pression de l'air comprimé.

Dans l'exemple représenté, le câble 8 est notamment un câble gainé, enfermant une pluralité de fibres optiques ou le cas échéant des conducteurs électriques, par exemple des lignes téléphoniques. Il comporte en tête un organe d'accrochage ou clou de tirage 9, permettant de le réunir à un moyen de liaison 10 prévu à l'arrière d'un premier furet ou piston 11 monté à l'intérieur de la conduite 1, en avant du câble.

Conformément à l'invention, ce premier furet 11 est associé à un second furet 12, de structure sensiblement analogue à un détail près, qui sera mieux précisé plus loin. Le furet 11 comporte dans sa partie avant, opposée à celle comprenant le moyen de liaison 10, une manille 13 sur laquelle est fixée l'extrémité d'un filin de connexion souple 14, réuni à l'extrémité opposée à un moyen de liaison 15, analogue au moyen 10 mais prévu à l'arrière du second furet 12.

Les deux furets 11 et 12 délimitent ainsi avec la paroi interne 16 de la conduite 1, une réserve pour un lubrifiant 17, en contact avec cette paroi sur toute la longueur de cette conduite au fur et à mesure du déplacement dans celle-ci des furets avec le câble 8, ce déplacement étant réalisé grâce à la poussée de l'air comprimé introduit dans la conduite par le pistolet 5, en arrière des deux furets.

Selon l'invention, le premier furet 11 présente une configuration telle, que dans sa dimension transversale la plus importante, il délimite avec la paroi interne 16 de la conduite 1, un jeu annulaire 18 de faible dimension mais permettant néanmoins, au fur et à mesure du déplacement du furet, l'échappement d'une partie du lubrifiant de la réserve 17, simultanément avec le déplacement du câble lors de sa mise en place dans la conduite 1. En revanche, le second furet 12 comporte une dimension transversale maximale telle qu'il vient sensiblement en contact selon une zone 19 avec la paroi 16, en créant à cet endroit une relative étanchéité de manière que, lors du déplacement du câble 8, sous la poussée de l'air comprimé, le lubrifiant de la réserve 17 ne puisse s'échapper vers l'avant du second furet 12 que dans une proportion relativement limitée, l'épuisement de la réserve se réalisant de façon majoritaire vers l'arrière du premier furet à travers le jeu 18, en lubrifiant ainsi la paroi interne de la conduite 1 sur toute sa longueur.

La Figure 2 illustre la position relative des deux furets 11 et 12 au voisinage de l'extrémité de la conduite 1 opposée à celle, représentée en 3 sur la Figure 1, par laquelle est introduite la tête du câble 8. En fin de course en effet, la réserve de lubrifiant, dont le volume initial a précisément été déterminé en fonction de la longueur de la conduite et du débit de fuite à travers le jeu 18 selon la vitesse de déplacement du câble, sous l'effet du soufflage par l'air comprimé entraînant les furets, est pratiquement entièrement épuisé, le filin souple 14 reliant les deux furets étant détendu en permettant leur rapprochement relatif. A l'avant du second furet 12, la référence 20 schématise la présence d'une émulsion d'air et de lubrifiant produite dans cette zone, en raison de l'étanchéité non parfaite du second furet dans la zone de contact 19 et d'une légère fuite du lubrifiant en avant de ce furet du fait de la pression de l'air comprimé, cette émulsion ayant d'ailleurs un effet favorable, en permettant un meilleur glissement de ce second furet contre la paroi 16 d'une extrémité à l'autre de la conduite.

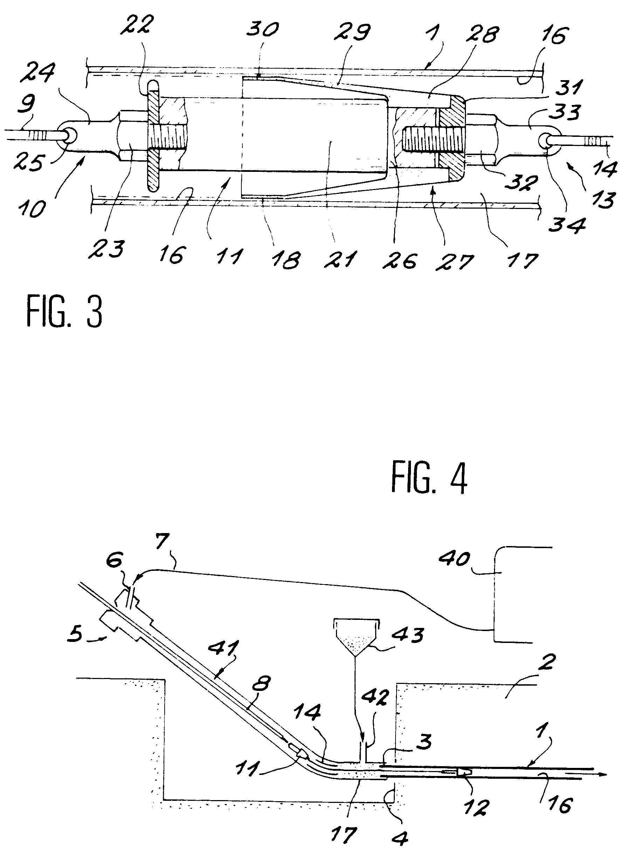

La Figure 3 illustre avec plus de détails la structure du premier furet 11 et de l'organe d'accrochage 10 qu'il comporte avec le clou de tirage 9 prévu en tête de ce câble. Le furet comporte ainsi un corps central 21, de forme générale cylindrique, sur l'extrémité arrière duquel est rapportée une bague de guidage 22, ajourée latéralement afin de permettre le passage de l'air comprimé provenant du pistolet 5, s'exerçant sur le furet. La bague 22 est bloquée à l'arrière du corps 21 au moyen d'un écrou 23 faisant partie de l'organe 10 et prolongé par une patte 24 munie d'un trou 25 pour le montage de l'extrémité en forme de crochet ou autre du clou de tirage 9. A l'opposé, le corps 21 comporte un épaulement 26 formant butée pour une tête 27 du furet, comprenant une bague cylindrique 28 prolongée par une jupe mince 29, de forme sensiblement conique, s'étendant en direction de la paroi interne 16 de la conduite 1. Cette jupe 29 est terminée à l'opposé de la bague 28 par un rebord annulaire 30, sensiblement coaxial à l'axe commun du corps 21 et de la conduite 1, en délimitant avec la paroi 16 le jeu 18 par lequel s'échappe le lubrifiant de la réserve 17. La bague 28 est bloquée contre l'épaulement 26 du corps 21 au moyen d'une collerette 31, elle-même immobilisée par un écrou 32 comprenant à son tour une patte 33 et un trou 34, l'ensemble constituant la manille 13 d'accrochage de l'extrémité correspondante du filin de connexion 14.

Le second furet 12 présente une structure sensiblement identique à celle du furet 11 décrite ci-dessus, sauf en ce qui concerne le rebord annulaire 30 qui est dans ce cas supprimé ainsi que, s'il y a lieu, les moyens d'accrochage 13 prévus à l'avant de ce furet, la jupe mince 29 venant sensiblement au contact de la paroi interne 16 de la conduite dans la zone 19 pour réaliser en cet endroit une étanchéité relative vis-à-vis du lubrifiant, comme déjà précisé. Avantageusement, les deux furets et en particulier leurs jupes minces sont réalisés en un matériau présentant un faible coefficient de frottement, notamment en "Téflon".

La Figure 4 illustre à plus faible échelle, des dispositions annexes permettant de constituer la réserve de lubrifiant 17 à introduire à l'intérieur de la conduite 1 entre les deux furets 11 et 12 lors de la mise en place du câble. Sur cette figure a été schématiquement représenté le pistolet d'injection muni de sa conduite d'admission 6 de l'air comprimé 7 délivré par un compresseur ou analogue prévu à l'extérieur, notamment sur le sol au-dessus de la conduite enterrée 1, au voisinage de la fosse 4. Le pistolet 5 est représenté réuni à l'extrémité 3 de la conduite débouchant dans cette fosse au moyen d'un raccord 41 sur lequel s'adapte un embout 42, lui-même réuni à un réservoir 43 de lubrifiant. Le premier furet 11 est représenté situé en amont du réservoir et le second furet 12 en aval, le réservoir communiquant ainsi avec la réserve 17 prévue entre les furets. Une fois ceux-ci introduits dans la conduite 1, avec la réserve 17 entre eux remplie de lubrifiant, le raccord 41 peut être retiré, le pistolet 5 étant avantageusement réuni à l'entrée de la conduite pour introduire dans celle-ci l'air comprimé sous pression à l'arrière des deux furets et exercer sur ceux-ci la pression nécessaire à l'avance continue du câble 8.

Le dispositif fonctionne alors de la manière suivante. Sous la poussée de l'air comprimé, le second furet 12, dont la dimension transversale est telle qu'il assure dans la zone de contact avec la paroi interne 16 de la conduite une étanchéité relative satisfaisante, constitue l'organe de traction assurant l'entraînement du câble 8 sous l'effet de la pression de l'air ainsi fournie sur la tête du furet. Cet effort de traction est transmis par le filin de connexion 14 au premier furet 11, lui-même réuni au clou de tirage 9 du câble. Le premier furet 11 assure ainsi le refoulement du lubrifiant dans la réserve 17, en permettant, du fait de la présence du jeu annulaire 18, de former sur la paroi interne 16 une pellicule de lubrifiant, facilitant dans des proportions considérables le déplacement du câble.

Lorsque l'effort de tirage nécessaire au cheminement du câble devient très important, en pratique lorsque la longueur de câble engagée dans la conduite se rapproche de la longueur totale à mettre en place, le second furet prend le relais afin de mobiliser l'effort de tirage maximal créé par la pression de l'air, le filin de connexion 14 ayant alors pour fonction de transmettre l'effort entre les deux furets.

Ce dispositif à deux furets permet également de faciliter le franchissement de discontinuité locale dans le diamètre de la conduite, en particulier au droit d'un joint de liaison, le second furet 12, prévu en tête de l'attelage des deux furets pouvant être freiné ou stoppé au passage d'une discontinuité. Dans ce cas, le premier furet se substitue automatiquement à l'autre en le poussant sous l'effet de l'air comprimé, le filin de connexion souple entre les furets permettant d'encaisser sans difficultés les à coups en résultant.

## Revendications

1. Procédé pour la lubrification d'une conduite enterrée (1), simultanément au soufflage et à la mise en place d'un câble (8) dans cette conduite (1), par injection d'air comprimé (7) à une des extrémités de celle-ci par laquelle pénètre le câble (8) pour exercer sur au moins un furet (11) ou analogue, monté ou lié en tête (9) de câble (8) et fermant la conduite (1) de manière sensiblement étanche, ce furet (11) transmettant un effort de traction pour l'entraînement du câble (8), caractérisé en ce qu'il consiste à lubrifier en permanence la surface interne de la conduite (1) au fur et à mesure du déplacement du furet (11) au moyen d'une réserve de lubrifiant (17) de volume variable, délimitée et en contact avec la paroi interne (16) de la conduite (1), disposé en arrière du furet (11) mais à l'avant du câble (8) et se déplaçant avec celui-ci selon la longueur de la conduite (1).

2. Dispositif pour la mise en oeuvre du procédé selon la revendication 1, caractérisé en ce qu'il comporte un premier furet (11) lié à la tête (9) du câble (8), présentant un diamètre externe ou une dimension transversale légèrement inférieure au diamètre interne de la conduite (1), et un second furet (12), placé à distance limitée du premier, en avant de celui-ci par rapport à la direction de déplacement du câble dans la conduite et réuni au premier furet par une liaison souple (14), le second furet présentant un diamètre externe sensiblement égal au diamètre interne de la conduite, l'espace compris entre les deux furets et la paroi intérieure de la conduite formant réserve (17) pour un volume de lubrifiant déterminé en fonction de la longueur totale de la conduite où le câble est à mettre en place et du débit de fuite du lubrifiant vers l'arrière du premier furet à la périphérie de celui-ci.

3. Dispositif selon la revendication 2, caractérisé en ce que la liaison souple (14) entre les premier (11) et second (12) furets est constituée par un filin de connexion flexible, propre à accommoder les variations de la distance entre ces furets au fur et à mesure de l'épuisement de la réserve (17) du lubrifiant lors de la mise en place du câble (8) selon la longueur de la conduite (1).

4. Dispositif selon l'une des revendications 2 ou 3, caractérisé en ce que chaque furet (11,12) comporte un corps central (21), terminé à l'arrière par une bague de guidage ajourée (22) et à l'avant par une tête (27) s'étendant, au moins en partie transversalement en direction de la paroi interne (16) de la conduite (1).

5. Dispositif selon la revendication 4, caractérisé en ce que la tête (27) du premier furet (11) comporte à l'avant, en regard du second furet, un organe d'accrochage (13) avec le filin de connexion flexible (14) et à l'arrière une jupe mince annulaire (29), faisant saillie à partir du corps central en direction de la paroi interne (16) de la conduite (1).

6. Dispositif selon la revendication 5, caractérisé en ce que la jupe mince (29) comporte une surface conique, terminée par un rebord sensiblement cylindrique (30), ménageant entre la jupe et la paroi interne de la conduite un jeu annulaire réduit (18), pour l'échappement contrôlé du lubrifiant lors du déplacement du furet (11).

7. Dispositif selon l'une quelconque des revendications 2 à 6, caractérisé en ce que les premier (11) et second (12) furets sont réalisés en un matériau présentant un coefficient de friction limité vis-à-vis de la paroi interne de la conduite, notamment en polytétrafluoroéthylène "Téflon" ou analogue.

## Patentansprüche

1. Verfahren zum Einfetten eines erdverlegten Rohrs (1) mit gleichzeitigem Einblasen und Einführen eines Kabels (8) in dieses Rohr (1) durch Einbringen von Druckluft (7) an einem seiner Enden, durch das das Kabel (8) eindringt, um auf wenigstens einen Molch (11) oder ähnliches, der am Kopf (9) des Kabels (8) angebracht oder damit verbunden ist und das Rohr (1) im wesentlichen dicht verschließt, eine Zugkraft zum Antrieb des Kabels (8) auszuüben, dadurch gekennzeichnet, daß es darin besteht, die Innenfläche des Rohrs (1) je nach der Verschiebung des Molchs (11) mittels eines Vorrats an Schmiermittel (17) mit veränderlichem Volumen ständig einzufetten, der von der Innenwand (16) des Rohrs (1) abgegrenzt ist und mit ihr in Kontakt steht, hinter dem Molch (11) aber vor dem Kabel (8) angeordnet ist und sich mit diesem entlang der Länge des Rohrs (1) verschiebt.

2. Vorrichtung zur Durchführung des Verfahrens nach Anspruch 1, dadurch gekennzeichnet, daß es einen ersten mit dem Kopf (9) des Kabels (8) verbundenen Molch (11), der einen Außendurchmesser oder eine Querabmessung aufweist, die leicht unter dem Innendurchmesser des Rohrs (1) liegt, sowie einen zweiten Molch (12) aufweist, der in einem begrenzten Abstand vom ersten sitzt, wobei er bezüglich der Verschiebungsrichtung des Kabels in dem Rohr vor diesem liegt und mit dem ersten Molch durch eine elastische Verbindung (14) verbunden ist, wobei der zweite Molch einen Außendurchmesser aufweist, der im wesentlichen gleich dem Innendurchmesser des Rohrs ist, wobei der zwischen den beiden Molchen und der Innenwand des Rohrs liegende Raum einen Vorrat (17) für ein Schmiermittelvolumen bildet, das in Abhängigkeit von der Gesamtlänge des Rohrs, in das das Kabel einzuführen ist, sowie von dem Leckagedurchsatz des Schmiermittels zum hinteren Teil des ersten Molches an dessen Umfang bestimmt ist.

3. Vorrichtung nach Anspruch 2, dadurch gekennzeichnet, daß die elastische Verbindung (14) zwischen dem ersten (11) und dem zweiten Molch (12) durch ein flexibles Verbindungstau gebildet ist, das dazu geeignet ist, die Schwankungen im Abstand zwischen diesen Molchen je nach der Erschöpfung des Vorrats (17) des Schmiermittels beim Einführen des Kabels (8) entlang der Länge des Rohrs (1) aufzunehmen.

4. Vorrichtung nach einem der Ansprüche 2 oder 3, dadurch gekennzeichnet, daß jeder Molch (11, 12) einen zentralen Körper (21) aufweist, der am hinteren Teil durch einen gelochten Führungsring (22) und am vorderen Teil durch einen Kopf (27) abgeschlossen ist, der sich wenigstens teilweise in Richtung der Innenwand (16) des Rohrs (1) quer erstreckt.

5. Vorrichtung nach Anspruch 4, dadurch gekennzeichnet, daß der Kopf (27) des ersten Molchs (11) am vorderen Teil gegenüber dem zweiten Molch ein Einhakorgan (13) für das flexible Verbindungstau (14) und am hinteren Teil eine dünne ringförmige Schürze (29) aufweist, die ausgehend von dem zentralen Körper in Richtung der Innenwand (16) des Rohrs (1) vorspringt.

6. Vorrichtung nach Anspruch 5, dadurch gekennzeichnet, daß die dünne Schürze (29) eine kegelförmige Oberfläche aufweist, die durch einen im wesentlichen zylindrischen umgebogenen Rand (30) abgeschlossen ist, der zwischen der Schürze und der Innenwand des Rohrs ein reduziertes ringförmiges Spiel (18) zum kontrollierten Entweichen des Schmiermittels bei der Verschiebung des Molchs (11) aufweist.

7. Vorrichtung nach einem der Ansprüche 2 bis 6, dadurch gekennzeichnet, daß der erste (11) und der zweite Molch (12) aus einem Material hergestellt sind, das einen begrenzten Reibungskoeffizienten gegenüber der Innenwand des Rohrs aufweist, insbesondere aus Polytetrafluorethylen "Teflon" oder ähnlichem.

## Claims

1. Method for the lubrication of an underground conduit (1), at the same time as the blowing and laying of a cable (8) in this conduit (1), by the injection of compressed air (7) at one of the ends of the latter, through which the cable (8) penetrates in order to exert on at least one "pig" (11) or the like, mounted or connected at the head (9) of the cable (8) and closing off the conduit (1) in a substantially air-tight manner, this "pig" (11) transmitting a pulling force for the entrainment of the cable (8), characterised in that it consists of permanently lubricating the inner surface of the conduit (1) as the "pig" (11) moves, by means of a reserve of lubricant (17) of variable volume, which is defined and in contact with the inner wall (16) of the conduit (1), disposed behind the "pig" (11) but in front of the cable (8) and moving with the latter along the length of the conduit (1).

2. Device for carrying out the method according to Claim 1, characterised in that it comprises a first "pig" (11) connected to the head (9) of the cable (8), having an outer diameter or transverse dimension slightly smaller than the inner diameter of the conduit (1), and a second "pig" (12), located at a limited distance from the first, in front of the latter with respect to the direction of movement of the cable in the conduit and connected to the first "pig" by a flexible connection (14), the second "pig" having an outer diameter substantially equal to the inner diameter of the conduit, the space comprised between the two "pigs" and the inner wall of the conduit forming a reserve (17) for a volume of lubricant determined as a function of the total length of the conduit in which the cable is to be laid and on the leakage rate of the lubricant towards the rear of the first "pig" on the periphery of the latter.

3. Device according to Claim 2, characterised in that the flexible connection (14) between the first "pig" (11) and second "pig" (12) is constituted by a flexible connection cord, able to accommodate the variations in the distance between these "pigs" as the reserve (17) of lubricant is exhausted, at the time of laying of the cable (8) along the length of the conduit (1).

4. Device according to one of Claims 2 or 3, characterised in that each "pig" (11, 12) comprises a central body (21), terminated at the rear by a perforated guide ring (22) and at the front by a head (27), extending, at least partly transversely in the direction of the inner wall (16) of the conduit (1).

5. Device according to Claim 4, characterised in that the head (27) of the first "pig" (11) comprises at the front, opposite the second "pig", a member (13) for attachment to the flexible connection cord (14) and at the rear a thin annular skirt (29), projecting from the central body in the direction of the inner wall (16) of the conduit (1).

6. Device according to Claim 5, characterised in that the thin skirt (29) comprises a conical surface, terminated by a substantially cylindrical rim (30), providing between the skirt and the inner wall of the conduit a reduced annular clearance (18), for the controlled escape of the lubricant at the time of movement of the "pig" (11).

7. Device according to one of Claims 2 to 6, characterised in that the first "pig" (11) and the second "pig" (12) are made from a material having a coefficient of friction which is limited with regard to the inner wall of the conduit, in particular of polytetrafluoroethylene "Teflon" or the like.
